(19) Europäisches Patentamt

European Patent Office

Office européen des brevets

(11) **EP 4 249 863 B1**

(12) **EUROPEAN PATENT SPECIFICATION**

(45) Date of publication and mention
of the grant of the patent:
**11.02.2026 Bulletin 2026/07**

(21) Application number: **22164108.7**

(22) Date of filing: **24.03.2022**

(51) International Patent Classification (IPC):
$G01H\ 1/00^{(2006.01)}$    $B65B\ 57/00^{(2006.01)}$
$F16P\ 7/00^{(2006.01)}$    $G01M\ 13/045^{(2019.01)}$
$G01M\ 13/028^{(2019.01)}$    $G05B\ 19/406^{(2006.01)}$
$B65B\ 57/18^{(2006.01)}$

(52) Cooperative Patent Classification (CPC):
**G01H 1/003; G01M 13/028; G01M 13/045;**
**B65B 57/18; F16P 7/00**

(54) **SYSTEM FOR MONITORING VIBRATION ANOMALIES IN PACKAGING MACHINES**

SYSTEM ZUM ÜBERWACHEN VON SCHWINGUNGSANOMALIEN IN
VERPACKUNGSMASCHINEN

SYSTÈME DE SURVEILLANCE D'ANOMALIES DE VIBRATION DANS DES MACHINES DE
CONDITIONNEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**27.09.2023 Bulletin 2023/39**

(73) Proprietor: **Sidel Participations**
**76930 Octeville-sur-Mer (FR)**

(72) Inventor: **BINI, Ugo**
**43126 Parma (IT)**

(74) Representative: **Sidel Group**
**c/o Sidel Participations**
**Avenue de la Patrouille de France**
**76930 Octeville-sur-mer (FR)**

(56) References cited:
**EP-A1- 2 226 621**     **EP-B1- 2 108 928**
**DE-C5- 102007 039 699**    **US-A1- 2008 269 923**

## Description

The present invention relates to a system for monitoring motion anomalies in container processing machines of a container processing plant.

In general, the present solution may be implemented in plants for processing any type of containers, such as bottles (or other kinds of containers) made of glass, plastic (PET), aluminium, steel and composite materials, that are to be filled with any type of pourable product, including sparkling liquids, such as sparkling water, non-alcoholic beverages and beer; non-effervescent liquids, such as natural water, juices, tea, integrators for sport activities and wine; and liquid detergents, emulsions, suspensions, or high-viscosity liquids. The following disclosure will make particular reference, without this implying any loss of generality, to a plant for filling containers, like bottles, with a pourable liquid, in particular a food product.

As is known, a plant for processing containers comprises a number of container processing machines arranged so as to form a processing line; these container processing machines may include a forming machine, for example a blower, a filling machine, a capping machine, a labelling machine, a sterilising machine, a palletizer.

In known solutions, each container processing machine is of the rotary type, comprising a respective rotating conveyor (so called "carousel") mounted on a main bearing and driven into rotation about a vertical axis by an electric motor.

For example, a rotary-type filling machine comprises a reservoir containing a pourable product and a plurality of filling devices (or "filling valves"), which are peripherally carried by the respective carousel, are connected to the reservoir by means of ducts and are carried by the carousel along a circumferential transfer path. A typical filling machine also comprises input and output container conveying means, in particular an inlet conveyor for feeding a succession of empty containers to the carousel and an outlet conveyor receiving the filled containers from the carousel and configured to feed the filled containers to further processing devices, such as a capping device or a labeler device.

In such container processing plants, in order to prevent waste of products, mechanical damages or forced stops of operation, proper monitoring of performance of the container processing machines has to be implemented, preferably on a continuous basis; this monitoring is designed to allow a proper maintenance, possibly of a preemptive nature, of the container processing machines.

In particular, mechanical vibrations play a crucial role in this context; vibrations may for example be associated with centrifugal forces at rotating machine parts and may be caused by a plurality of factors, among which unbalances, improper alignments, bearing-related damages, transmission faults and similar. Vibration analysis on moving parts of the container processing machines may allow to timely detect and/or predict anomalies and mechanical damages at an early stage and therefore avoid malfunctions.

However, vibration analysis applied to the plurality of moving parts of the container processing machines is quite complex, since all these moving parts are characterized by many sources of vibration, many types of faults, different moving speeds, different mechanical designs, different dimensions for different processing machine sizes, and so on.

EP2226621A1 discloses a method for predicting a fault in a rolling bearing. DE102007039699C5 discloses a method for monitoring vibration level values in an industrial gearbox.

The Applicant has realized that, also due to the complexity of the mechanical system as described above, currently available monitoring solutions do not generally allow to reliably identify the main probable causes of failures in container processing machines, in order to carry out and/or plan proper maintenance operations.

The need is therefore felt for a monitoring solution that will allow to identify causes of failure in container processing machines and to guide and/or plan corresponding maintenance operations.

The aim of the present solution is to solve, at least in part, the problem previously highlighted, and in general to satisfy the above need.

According to the present solution, a system for monitoring motion anomalies in a rotative container processing machine is provided as defined in independent claim 1. Further advantageous aspects of the invention are defined in the dependent claims.

For a better understanding of the present invention, preferred embodiments thereof are now described, purely by way of non-limiting examples, with reference to the attached drawings, wherein:

- Figure 1 is a schematic block diagram of an automated system for monitoring motion anomalies of a container processing machine, according to an embodiment of the present solution;
- Figure 2 is a flow chart of operations performed by the automated system of Figure 1;
- Figure 3 is a plot of a frequency spectrum associated with mechanical vibrations in the container processing machine;
- Figure 4 is a schematic representation of a portion of a rotary-type container processing machine; and
- Figures 5 and 6 are frequency plots relating to a vibration analysis of the operation of the container processing machine.

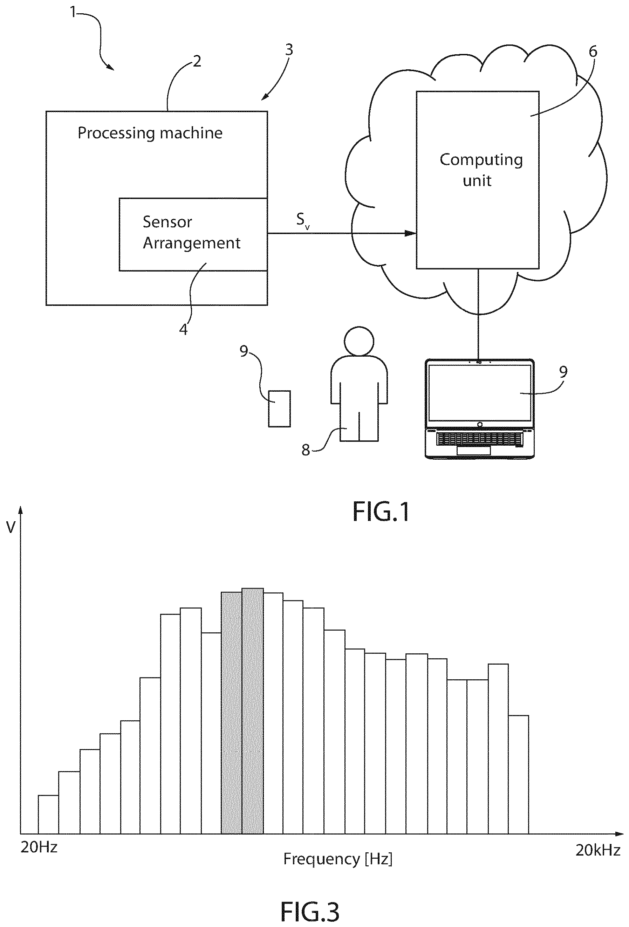

Figure 1 shows schematically an automated monitoring system 1 for monitoring motion anomalies of at least one container processing machine 2 of a container processing plant 3, e.g. a rotating-type filling machine configured to fill containers with a pourable product, for example a food product.

In a known manner and as discussed before, the container processing plant 3 may comprise a number of container processing machines 2 arranged so as to form a container processing line. Any container processing machine can be for example a containers forming machine, a containers filling machine, a containers labelling machine, a containers packing machine, a containers palletizing machine, or another type of machine which can be used for packaging a pourable product by means of containers. The containers can be for example bottles or cans or cartons. The bottles can be for example glass bottles or PET bottles. The container processing plant can be for example a plant for the packaging of a pourable product by means of container.

The automated monitoring system 1 comprises a vibration sensor arrangement 4, arranged at the container processing plant 3 and coupled to the at least one container processing machine 2.

The vibration sensor arrangement 4 is configured to detect, in particular in real time and in a continuous manner, vibration patterns associated with the operation of the container processing machine 2 and to generate corresponding vibration signals $S_V$. For example, the vibration sensor arrangement 4 may include a number of accelerometer sensors (or other vibration sensors of a known type), coupled to the container processing machine 2 at suitable positions to sense the vibration patterns along one or more vibration axes in order to generate the vibration signals $S_V$, being indicative of the same vibration patterns.

The automated monitoring system 1 further comprises a computing unit 6, coupled to the vibration sensor arrangement 4 and configured to receive (in a continuous manner over time or at certain time intervals) the vibration signals $S_V$ associated with the operation of the at least one container processing machine 2.

The computing unit 6 may be located in a remote server (e.g. in the so-called "cloud") and/or in a physical server at the plant site (which can also be accessed by an external network) and is operatively coupled to the sensor arrangement 4 via a suitable communication interface 7, e.g. via the Internet and/or an internal network.

The computing unit 6 is configured to process, in particular in the frequency domain, the vibration signals $S_V$ in order to monitor possible motion anomalies in the operation of the container processing machine 2 and in particular to identify possible causes of damage or failure (so as to cause implementation or planning of corresponding maintenance operations).

As shown in the same Figure 1, an operator 8 of the container processing plant 3, having a processing device 9 (e.g. a portable or mobile device like a smartphone, a tablet, a phablet or similar), may be able to access the computing unit 6 via a software application ("app"), in order to input and/or retrieve data and information relating to the operation of the container processing machine 2. The operator 8 may also communicate with the computing unit 6 via a fixed computer (or similar processing device, also denoted with 9), provided with a suitable graphical user interface.

The computing unit 6 may be configured to provide warning and/or alarms upon identification of the motion anomalies and generate maintenance guidance with suggested interventions on the container processing machine 2. Advantageously, these warning and alarms and maintenance guidance may be provided to the operator 8 via the graphical user interface implemented on the respective processing device 9.

In more details, the computing unit 6 is configured to compute a vibration frequency spectrum over a frequency range of interest (e.g. comprised between 20 Hz and 20 kHz).

The same computing unit 6 analyses the vibration frequency spectrum (in a current time interval and its evolution in time) in order to detect and/or predict motion anomalies based on features and characteristics of the same vibration frequency spectrum. More in particular, the computing unit 6 is configured to analyse the frequency spectrum and determine the anomalies based on a knowledge of mechanical parts composing the mechanical configuration and the kinematics of the container processing machine 2 and based on current operating parameters of the same container processing machine 2, in particular based on a current operating speed.

The mechanical configuration of the container processing machine 2 comprises a plurality of different mechanical parts, including mechanical rotating components, such as bearings, e.g. slewing bearings, gears, e.g. gearmotors, etc.; and a plurality of mechanical couplings between the different mechanical parts.

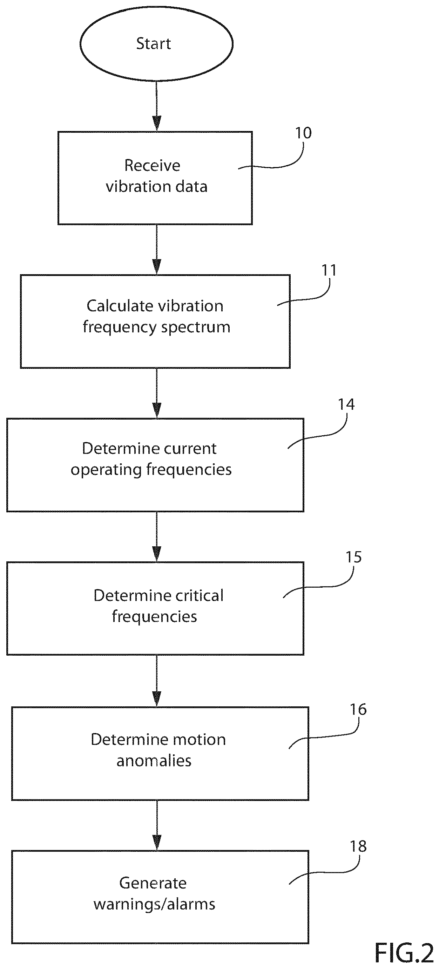

Referring also to Figure 2, the computing unit 6 is configured, as shown in step 10, to receive the vibration signals $S_V$ from the sensor arrangement 4 and, as shown in step 11, calculate the corresponding vibration frequency spectrum associated with the vibration of the container processing machine 2. The frequency spectrum may relate to at least one of the following variable: Vrms (vibration velocity root mean square value), Arms (vibration acceleration root mean square value) and Apeak (vibration acceleration peak).

In particular, the computing unit 6 may compute, starting from the vibration signals $S_V$, a Fourier transform (FT), in particular a fast Fourier transform (FFT) or an envelope curve fast Fourier transform (HFFT).

It is noted that the computation by the computing unit 6 may be performed in real-time (or quasi real-time), so that during operation, the vibrations at the container processing machine 2 are monitored continuously and warnings and alarms are generated if threshold or limit values are exceeded.

In an alternative embodiment, the computation may be performed off-line, i.e. at a separate time interval.

As shown at step 14, based on a full knowledge of the kinematics and mechanical configuration of the container processing machine 2, the computing unit 6 is configured to determine a current operating (or working) frequency for each of the mechanical parts of the container processing machine 2, as a function, for example, of at least a production speed (e.g. expressed in terms of number of containers produced per hour) of the same container processing machine 2.

It is noted that the current operating frequencies are related to a same time interval used for processing of the vibration signals $S_V$ received from the sensor arrangement 4 to determine the vibration frequency spectrum.

In particular, the operating frequencies are current rotation frequencies if the mechanical parts are rotating components like for example a bearing; or coupling or gearing frequencies, if the mechanical parts are couplings.

The computing unit 6 is then configured, as shown in step 15, to determine, for each of the above discussed mechanical parts, based on the respective current operating frequencies, one or more critical frequencies, being indicative of and associated with the occurrence of corresponding motion anomalies or defects.

In case of rotating components (such as bearings), the critical frequencies correspond to respective current damage or failing frequencies (and related harmonics). These current damage frequencies are a function of respective reference (or by-design) damage frequencies and of the respective current rotation frequencies, for example being computed by multiplying the reference damage frequencies by the current rotation frequencies.

For the mechanical couplings, the critical frequencies correspond to the current coupling frequencies, being dependent on the current production speed of the container processing machine 2, and to corresponding lateral frequency bands (considered with respect to the same coupling frequencies).

As shown at step 16, the computing unit 6 automatically detects possible problems to one or more of the mechanical parts of the container processing machine 2, analyzing the vibration frequency spectrum in the region of the respective critical frequencies, i.e. at the damage frequencies and related harmonics for the rotating mechanical parts, and at the coupling frequencies and in the related lateral frequency bands for the mechanical couplings.

The computing unit 6 is configured to analyze relevant characteristics and/or features in the vibration frequency spectrum and relate them to the computed critical frequencies in order to determine which mechanical part or parts show an anomalous operation.

The computing unit 6 is configured to evaluate peaks (or energy concentrations) in the vibration frequency spectrum and, based on a comparison between the frequencies of these peaks (or energy concentrations) and the above discussed current critical frequencies, determine which mechanical parts are damaged or show an anomalous operation.

The computing unit 6 may perform one or both of an instantaneous analysis based on the current frequency spectrum and a statistical or historical analysis, based on an evolution of the frequency spectrum over time. In particular, a statistical analysis may advantageously allow to better predict damages in the container processing machine 2 before they actually occur and therefore plan suitable maintenance operations avoiding unnecessary stops of the same container processing machine 2.

As shown at step 18, the computing unit 6 is configured to provide warnings and/or alarms upon identification of the motion anomalies and generate preventive maintenance guidance with suggested interventions on the container processing machine.

In a possible embodiment, as shown in Figure 3, the computing unit 6 is configured to perform a frequency analysis at a constant band, according to which the vibration frequency spectrum (denoted with V) is divided into a number (for example equal to 30) of frequency bands having the same amplitude (in the example, 1/3 octave bands).

Each frequency band corresponds to critical frequencies of one or more mechanical parts of the kinematic chain of the container processing machine 2, which fall within the same frequency band.

According to a possible embodiment, the computing unit 6 is configured to calculate and monitor the characteristics and/or features of the vibration frequency spectrum in each frequency band.

An alert or warning is generated by the same computing unit 6 when at least one characteristic of the frequency spectrum in one or more of the frequency bands exceeds a respective threshold or limit value.

These threshold values may be referred to a vibration pattern under normal operating conditions (that may be determined in a phase of characterization of the container processing machine 2). For example, the threshold values may correspond to a normal or baseline vibration value incremented of a suitable percentage value.

According to a possible embodiment, the threshold values may be dynamically adjusted, as a function of the rotating speed of the container processing machine 2.

Based on the frequency band(s) generating the alert, the computing unit 6 is able to determine which mechanical parts of the kinematic chain of the container processing machine 2 are to be considered the source of a detected and/or predicted failure.

For example, in Figure 3 two frequency bands (shown with a darker color) are determined to be critical and associated with respective mechanical parts of the container processing machine 2 having an anomalous behavior. For example, the Vrms values associated with the vibration pattern exceed in these two frequency bands corresponding threshold values.

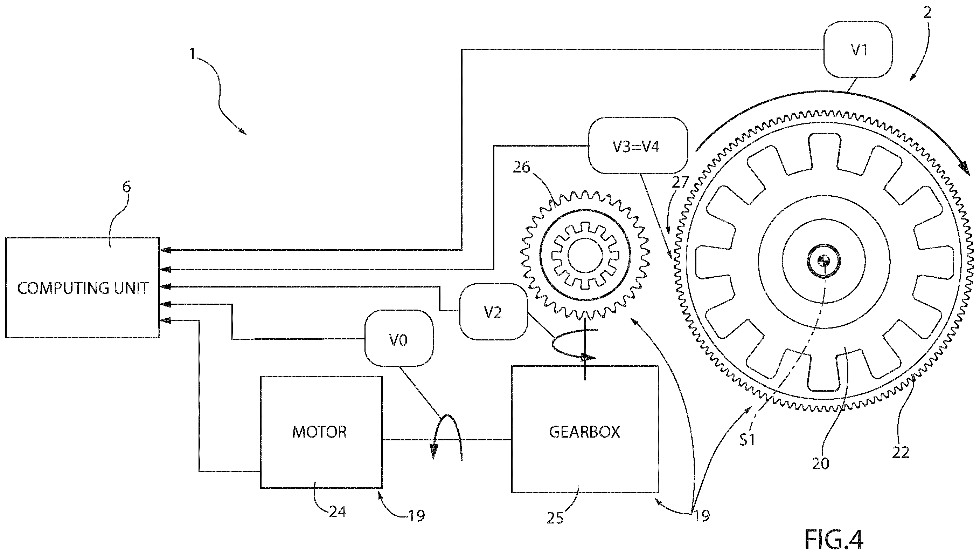

Figure 4 shows schematically and purely by way of example a portion of a container processing machine 2 monitored by the automated monitoring system 1, in particular a rotating-type filling machine configured to fill containers with a pourable food product.

The container processing machine 2 includes a plurality of moving mechanical parts, denoted in general with 19, cooperating for processing of containers.

In particular, the container processing machine 2 comprises a rotating conveyor ("carousel") 20, which rotates with an angular speed V1 around a vertical axis S1.

The carousel 20 is mounted on a main bearing 22, in particular a slewing bearing, which is driven into rotation about the vertical axis S1 by an electric motor 24, having an angular speed V0.

The exit of the electric motor 24 is coupled, via a reduction gearbox 25, to a pinion 26, which is in turn coupled to the main bearing 22.

The angular speed V1 of the carousel 20 depends on the ratio between the number of teeth of the main bearing 22, Zr, and the respective number of teeth of the pinion 26, Zp, according to the expression:

$$V1 = V2 * Zp / Zr,$$

wherein V2 is the angular speed at the exit of the electric motor 24 divided by the reduction ratio Ir of the reduction gearbox 25 (V2=V0/Ir).

In the same Figure 4, the mechanical coupling between the main bearing 22 and the pinion 26 is denoted with 27; the same main bearing 22 and pinion 26 works at the coupling at the same coupling frequency V3=V4.

As discussed above, the computing unit 6 (here shown schematically) has a full knowledge of the kinematic chain of the container processing machine 2, which, in this example, has three stages: the electric motor 24; the exit of the electric motor 24, corresponding to the pinion 26; and the carousel 20, corresponding to the main bearing 22.

For the above discussed monitoring of the vibration anomalies, the computing unit 6 may for example determine that:

- each mechanical part on the side of the carousel 20 works at an operating frequency given by V1; and
- each mechanical part on the side of the exit of the electrical motor 24 works at an operating frequency given by V2;
- the coupling works at a coupling frequency given by V1*Zr or V2*Zp.

In general, each of the stages in which the kinematics of the container processing machine 2 can be divided comprises a respective number of mechanical parts 19.

Each mechanical part of each stage is working at a current operating frequency, which depends on the electric motor angular velocity V0, which is in turn correlated to the production speed of the container processing machine 2.

The computing unit 6 automatically determines the current operating frequencies of all the mechanical parts 19 and in particular the rotation frequencies of the rotating mechanical parts (such as the main bearing 22) and the coupling frequencies of the mechanical couplings (such as the coupling 27 between the main bearing 22 and the pinion 26).

As discussed above, based on the computed operating frequencies of the rotating mechanical parts, the computing unit 6 is configured to determine the current damage frequencies (and related harmonics).

In the case of the main bearing 22, relevant damage frequencies may for example be the following: BPFO (Ball Pass Frequency Outer, i.e. outer race failing frequency); BSF (Ball Spin Frequency, i.e. rolling element failing frequency); BPFI (Ball Pass Frequency Inner, i.e. inner race failing frequency); FTF (Fundamental Train Frequency, i.e. cage failing frequency).

These damage frequencies are known, by design, at a reference rotation frequency. As discussed above, the computing unit 6 is configured to track the current values of the damage frequencies during the operation of the container processing machine 2, based on the current production speed of the same container processing machine 2; in other words, the current value of the damage frequencies is dynamically adjusted based on the current production speed, so that the position in the frequency spectrum of the same damage frequencies can be tracked.

For example, if a damage frequency is known, by design, at a reference rotation frequency of 1 Hz and the current rotation frequency is 0,1 Hz, then the reference value for the damage frequency is multiplied by the current rotation frequency of 0,1 Hz.

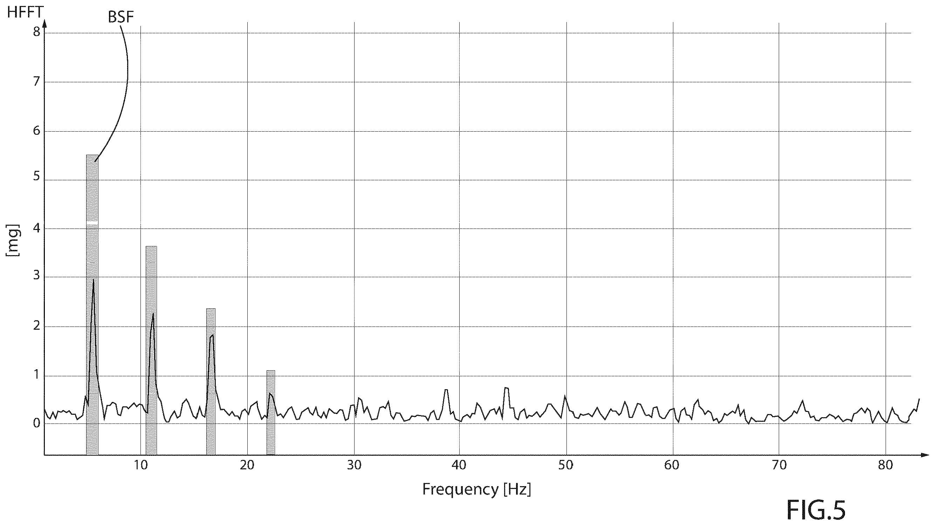

Figure 5 shows an exemplary frequency spectrum (in particular a HFFT spectrum) associated with the mechanical vibrations at the main bearing 22, where the BSF damage frequency and its harmonics up to the fourth order are highlighted.

As discussed above, analyzing the characteristics of the vibration frequency spectrum associated with the operation of the container processing machine 2 at these damage frequencies may allow to determine an actual anomaly for the main bearing 22 (for example, a damage on one of the sphere of the main bearing 22 may cause the amplitude of the second harmonic to significantly increase its value with respect to the fundamental frequency).

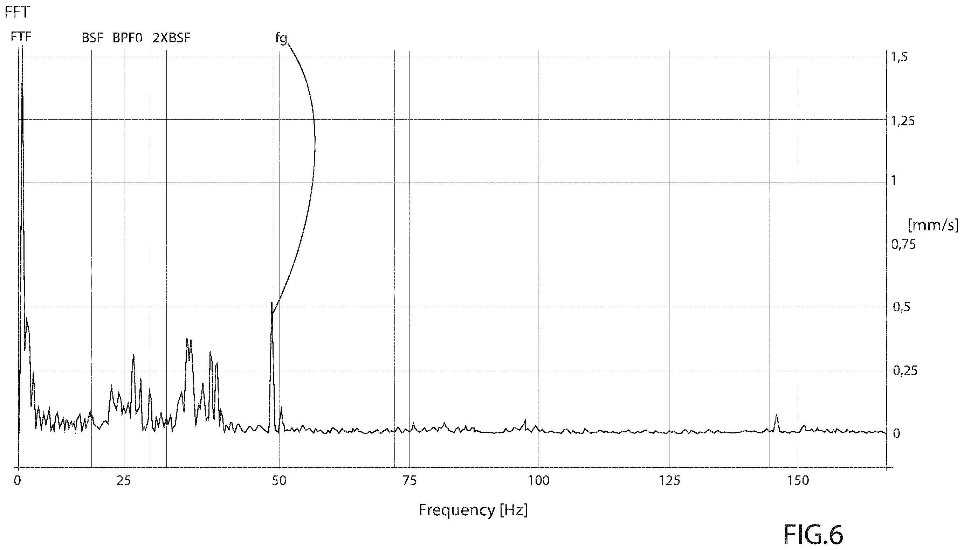

Figure 6 shows a further exemplary frequency spectrum (in this case, a FFT spectrum) associated with the vibrations at the main bearing 22, where the coupling or gearing frequency $f_g$ is highlighted (FTF, BSF and BPFO damage frequencies are also shown).

In particular, the gearing frequency $f_g$ depends on the production speed and the number of teeth of both coupling gears, i.e. the main bearing 22 and the pinion 26.

As discussed above, the computing unit 6 is configured to: dynamically adjust the value of the gearing frequency to be tracked in the vibration frequency spectrum, based on the current production speed of the container processing machine 2; and to track this value in the frequency spectrum, in order to analyze the region of the spectrum corresponding to the current gearing frequency (in particular comprising the lateral bands around the current gearing frequency).

The advantages that the described solution allows to achieve are clear from the foregoing description.

In any case, it is again underlined that the described automated monitoring system 1 provides a reliable and accurate monitoring of motion anomalies of container processing machines 2 of a container processing plant 3.

In particular, vibration patterns associated with the container processing machines 2 may be continuously detected and the related vibration frequency spectrum monitored to timely detect or predict possible anomalies to the mechanical parts 19 of the same container processing machines 2.

In line with a preventive maintenance, servicing activities can thus be planned more efficiently and carried out on schedule.

Finally, it is clear that modifications and variations may be applied to the solution described and shown, without departing from the scope of the present invention as defined in the appended claims.

In particular, it is underlined that the above discussed automated monitoring system 1 may be advantageously implemented within any kind of rotating container processing machine 3, to monitor possible motion anomalies thereof.

**Claims**

1. A system (1) for monitoring motion anomalies in a rotative container processing machine (2) having a plurality of moving mechanical parts (19), the system (1) comprising:

    a vibration sensor arrangement (4), configured to be coupled to the container processing machine (2) and configured to detect vibrations associated with operation of the container processing machine (2) for generation of at least one vibration signal; and
    a computing unit (6), coupled to the vibration sensor arrangement (4) and configured for receiving and processing the vibration signal ($S_V$), to detect motion anomalies of one or more of the mechanical parts (19) of the container processing machine (2),
wherein the computing unit (6) is configured for:

    automatically computing a vibration frequency spectrum associated with the vibration signal ($S_V$);
    **characterized in that** the computing unit (6) is configured for:

        automatically determining, for each of the mechanical parts (19) of the container processing machine (2), one or more current critical frequencies associated with occurrence of corresponding motion anomalies;
        automatically detecting motion anomalies of one or more of the mechanical parts (19), analyzing the vibration frequency spectrum in relation to the determined respective current critical frequencies;
        wherein the computing unit (6) is configured for: calculating, for each of the mechanical parts (19), a corresponding current operating frequency, based at least on a production speed of the container processing machine (2) and a knowledge of kinematics and mechanical configuration of the container processing machine (2); and determining the current respective critical frequencies associated with the mechanical parts (19), based on the respective current operating frequencies;
        wherein the mechanical parts (19) include rotating components (22, 26) and the critical frequencies of the rotating components correspond to respective current damage frequencies, the respective current operating frequencies corresponding to respective current rotation frequencies, being dependent on the current production speed of the container processing machine (2); wherein the computing unit (6) is configured for determining the respective current damage frequencies of the rotating components (22, 26) as a function of respective reference damage frequencies and of respective current rotation frequencies, and for detecting motion anomalies of one or more of the rotating components, by analyzing the vibration frequency spectrum at the respective current damage frequencies and possibly also at the related frequency harmonics and/or lateral bands;

wherein the mechanical parts (19) include mechanical couplings (27) and the current critical frequencies of the mechanical couplings correspond to current coupling frequencies, being dependent on the current production speed of the container processing machine (2); and wherein the computing unit (6) is configured for detecting motion anomalies of one or more of the mechanical couplings (27), analyzing the vibration frequency spectrum in the region of the respective current coupling frequencies;

wherein the computing unit (6) is configured to analyze relevant characteristics and/or features of the vibration frequency spectrum and relate them to the current critical frequencies, to determine which mechanical parts (19) have an anomalous operation;

wherein the computing unit (6) is configured for evaluating peaks and/or energy concentrations at respective frequencies in the vibration frequency spectrum and, based on a comparison between the frequencies associated with the peaks and/or energy concentrations and the current critical frequencies, determine the one or more mechanical parts (19) having motion anomalies.

2. The system according to claim 1, wherein the computing unit (6) is configured for determining the current critical frequencies of the rotating components (22, 26) as a product of the respective reference damage frequencies and of the respective current rotation frequencies.

3. The system according to claim any of the previous claims, wherein the computing unit (6) is configured for: performing a frequency analysis at a constant band, according to which the vibration frequency spectrum is divided into a number of frequency bands having a same width, each frequency band corresponding to critical frequencies of one or more mechanical parts (19) of the container processing machine (2); calculating at least one characteristic of the vibration frequency spectrum in each frequency band; determining if the at least one characteristic in one or more of the frequency bands exceeds a respective threshold or limit value; determining that the mechanical parts associated with the one or more of the frequency bands have an anomalous operation.

4. The system according to claim 3, wherein the threshold values are referred to a vibration pattern of the container processing machine (2) under normal operating conditions and are adjusted dynamically by the computing unit (6), as a function of the rotating speed of the container processing machine (2).

5. The system according to any of the previous claims, wherein frequency spectrum is related to at least one of the following variable: Vrms (vibration velocity root mean square value), Arms (vibration acceleration root mean square value) and Apeak (vibration acceleration peak).

6. The system according to any of the preceding claims, wherein the computing unit (6) is configured for performing one or both of an instantaneous analysis based on a current vibration frequency spectrum and a statistical analysis, based on an evolution of the vibration frequency spectrum over time.

7. The system according to any of the preceding claims, wherein the computing unit (6) is configured for providing warnings and/or alarms upon identification of the motion anomalies and generate preventive maintenance guidance with suggested interventions on the container processing machine (2).

8. The system according to any of the preceding claims, configured for detecting automatically the production speed, and for determining the critical frequencies automatically, based at least on the production speed.

9. A container processing plant (2) comprising at least one container processing machine (2) and a system for monitoring motion anomalies in the at least one container processing machine (2), according to any of the preceding claims.

**Patentansprüche**

1. System (1) zum Überwachen von Bewegungsanomalien in einer rotierenden Behälterverarbeitungsmaschine (2) mit einer Mehrzahl beweglicher mechanischer Teile (19), wobei das System (1) Folgendes umfasst:

eine Schwingungssensoranordnung (4), die dazu ausgelegt ist, mit der Behälterverarbeitungsmaschine (2) gekoppelt zu werden, und dazu ausgelegt ist, Schwingungen, die mit dem Betrieb der Behälterverarbeitungsmaschine (2) assoziiert sind, zur Erzeugung mindestens eines Schwingungssignals zu detektieren; und eine Recheneinheit (6), die mit der Schwingungssensoranordnung (4) gekoppelt und zum Empfangen und Verarbeiten des Schwingungssignals (S_V) ausgelegt ist, um Bewegungsanomalien eines oder mehrerer der mechanischen Teile (19) der Behälterverarbeitungsmaschine (2) zu detektieren, wobei die Recheneinheit (6) zu Folgendem ausgelegt ist:

automatischen Berechnen eines Schwingungsfrequenzspektrums, das mit dem Schwingungssignal (S_V) assoziiert ist; **dadurch gekennzeichnet, dass** die Recheneinheit (6) zu Folgendem ausgelegt ist:

automatischen Bestimmen einer oder mehrerer aktueller kritischer Frequenzen, die mit dem Auftreten entsprechender Bewegungsanomalien assoziiert sind, für jedes der mechanischen Teile (19) der Behälterverarbeitungsmaschine (2); automatischen Detektieren von Bewegungsanomalien eines oder mehrerer der mechanischen Teile (19) und Analysieren des Schwingungsfrequenzspektrums in Bezug auf die bestimmten jeweiligen aktuellen kritischen Frequenzen; wobei die Recheneinheit (6) zu Folgendem ausgelegt ist:

Berechnen einer entsprechenden aktuellen Betriebsfrequenz für jedes der mechanischen Teile (19) basierend zumindest auf einer Produktionsgeschwindigkeit der Behälterverarbeitungsmaschine (2) und einer Kenntnis der Kinematik und der mechanischen Konfiguration der Behälterverarbeitungsmaschine (2); und Bestimmen der aktuellen jeweiligen kritischen Frequenzen, die mit den mechanischen Teilen (19) assoziiert sind, basierend auf den jeweiligen aktuellen Betriebsfrequenzen; wobei die mechanischen Teile (19) rotierende Komponenten (22, 26) aufweisen und die kritischen Frequenzen der rotierenden Komponenten jeweiligen aktuellen Schadenfrequenzen entsprechen, wobei die jeweiligen aktuellen Betriebsfrequenzen jeweiligen aktuellen Rotationsfrequenzen entsprechen, die von der aktuellen Produktionsgeschwindigkeit der Behälterverarbeitungsmaschine (2) abhängen; wobei die Recheneinheit (6) dazu ausgelegt ist, die jeweiligen aktuellen Schadenfrequenzen der rotierenden Komponenten (22, 26) in Abhängigkeit von jeweiligen Referenzschadenfrequenzen und von jeweiligen aktuellen Rotationsfrequenzen zu bestimmen und Bewegungsanomalien einer oder mehrerer der rotierenden Komponenten durch Analysieren des Schwingungsfrequenzspektrums bei den jeweiligen aktuellen Schadenfrequenzen und möglicherweise auch bei den zugehörigen Frequenzoberwellen und/oder lateralen Bändern zu detektieren; wobei die mechanischen Teile (19) mechanische Kupplungen (27) aufweisen und die aktuellen kritischen Frequenzen der mechanischen Kupplungen aktuellen Kupplungsfrequenzen entsprechen, die von der aktuellen Produktionsgeschwindigkeit der Behälterverarbeitungsmaschine (2) abhängen; und wobei die Recheneinheit (6) dazu ausgelegt ist, Bewegungsanomalien einer oder mehrerer der mechanischen Kupplungen (27) zu detektieren und das Schwingungsfrequenzspektrum in dem Bereich der jeweiligen aktuellen Kupplungsfrequenzen zu analysieren; wobei die Recheneinheit (6) dazu ausgelegt ist, relevante Charakteristiken und/oder Merkmale des Schwingungsfrequenzspektrums zu analysieren und sie mit den aktuellen kritischen Frequenzen in Beziehung zu setzen, um zu bestimmen, welche mechanischen Teile (19) einen anomalen Betrieb aufweisen; wobei die Recheneinheit (6) dazu ausgelegt ist, Spitzen und/oder Energiekonzentrationen bei jeweiligen Frequenzen in dem Schwingungsfrequenzspektrum zu bewerten und basierend auf einem Vergleich zwischen den Frequenzen, die mit den Spitzen und/oder Energiekonzentrationen assoziiert sind, und den aktuellen kritischen Frequenzen den einen oder die mehreren mechanischen Teile (19) mit Bewegungsanomalien zu bestimmen.

2. System nach Anspruch 1, wobei die Recheneinheit (6) dazu ausgelegt ist, die aktuellen kritischen Frequenzen der rotierenden Komponenten (22, 26) als ein Produkt der jeweiligen Referenzschadenfrequenzen und der jeweiligen aktuellen Rotationsfrequenzen zu bestimmen.

3. System nach einem der vorhergehenden Ansprüche, wobei die Recheneinheit (6) zu Folgendem ausgelegt ist:

Durchführen einer Frequenzanalyse in einem konstanten Band, gemäß der das Schwingungsfrequenzspektrum in eine Anzahl von Frequenzbändern mit gleicher Breite unterteilt wird, wobei jedes Frequenzband kritischen Frequenzen eines oder mehrerer mechanischer Teile (19) der Behälterverarbeitungsmaschine (2) entspricht; Berechnen mindestens einer Charakteristik des Schwingungsfrequenzspektrums in jedem Frequenzband;
Bestimmen, ob die mindestens eine Charakteristik in einem oder mehreren der Frequenzbänder einen jeweiligen Schwellenwert oder Grenzwert überschreitet; Bestimmen, dass die mechanischen Teile, die mit dem einen oder den mehreren der Frequenzbänder assoziiert sind, einen anomalen Betrieb aufweisen.

4. System nach Anspruch 3, wobei sich die Schwellenwerte auf ein Schwingungsmuster der Behälterverarbeitungsmaschine (2) unter normalen Betriebsbedingungen beziehen und von der Recheneinheit (6) in Abhängigkeit von der Rotationsgeschwindigkeit der Behälterverarbeitungsmaschine (2) dynamisch angepasst werden.

5. System nach einem der vorhergehenden Ansprüche, wobei sich das Frequenzspektrum auf mindestens eine der folgenden Variablen bezieht: Vrms (Effektivwert der Schwingungsgeschwindigkeit), Arms (Effektivwert der Schwingungsbeschleunigung) und Apeak (Spitze der Schwingungsbeschleunigung).

6. System nach einem der vorhergehenden Ansprüche, wobei die Recheneinheit (6) dazu ausgelegt ist, eine oder beide von einer Momentananalyse basierend auf einem aktuellen Schwingungsfrequenzspektrum und einer statistischen Analyse basierend auf einer Entwicklung des Schwingungsfrequenzspektrums im Zeitverlauf durchzuführen.

7. System nach einem der vorhergehenden Ansprüche, wobei die Recheneinheit (6) dazu ausgelegt ist, bei Identifizierung der Bewegungsanomalien Warnungen und/oder Alarme bereitzustellen und Anleitungen zur vorbeugenden Wartung mit empfohlenen Eingriffen an der Behälterverarbeitungsmaschine (2) zu erzeugen.

8. System nach einem der vorhergehenden Ansprüche, das zum automatischen Detektieren der Produktionsgeschwindigkeit und zum automatischen Bestimmen der kritischen Frequenzen zumindest basierend auf der Produktionsgeschwindigkeit ausgelegt ist.

9. Behälterverarbeitungsanlage (2), umfassend mindestens eine Behälterverarbeitungsmaschine (2) und ein System zum Überwachen von Bewegungsanomalien in der mindestens einen Behälterverarbeitungsmaschine (2) nach einem der vorhergehenden Ansprüche.

**Revendications**

1. Système (1) de surveillance d'anomalies de mouvement dans une machine rotative de traitement de conteneurs (2) comportant une pluralité de pièces mécaniques en mouvement (19), le système (1) comprenant :

un agencement de capteur de vibrations (4), configuré pour être couplé à la machine de traitement de conteneurs (2) et configuré pour détecter des vibrations associées au fonctionnement de la machine de traitement de conteneurs (2) afin de générer au moins un signal de vibration ; et
une unité de calcul (6), couplée à l'agencement de capteur de vibrations (4) et configurée pour recevoir et traiter le signal de vibration $(S_V)$, pour détecter des anomalies de mouvement d'une ou plusieurs des pièces mécaniques (19) de la machine de traitement de conteneurs (2), où l'unité de calcul (6) est configurée pour :

calculer automatiquement un spectre de fréquences de vibration associé au signal de vibration $(S_V)$ ;
**caractérisé en ce que** l'unité de calcul (6) est configurée pour :

déterminer automatiquement, pour chacune des pièces mécaniques (19) de la machine de traitement de conteneurs (2), une ou plusieurs fréquences critiques courantes associées à l'apparition d'anomalies de mouvement correspondantes ;
détecter automatiquement des anomalies de mouvement d'une ou plusieurs des pièces mécaniques (19), analyser le spectre de fréquences de vibration en relation avec les fréquences critiques courantes respectives déterminées ; où l'unité de calcul (6) est configurée pour : calculer, pour chacune des pièces mécaniques (19), une fréquence de fonctionnement courante correspondante, sur la base au moins d'une vitesse de production de la machine de traitement de conteneurs (2) et d'une connaissance de la cinématique et de la configuration mécanique de la machine de traitement de conteneurs (2) ; et déterminer les fréquences critiques respectives courantes associées aux pièces mécaniques (19), sur la base des fréquences de fonctionnement courantes respectives ; où les pièces mécaniques (19) comprennent des composants rotatifs (22, 26) et les fréquences critiques des composants rotatifs correspondent à des fréquences de dommages courantes respectives, les fréquences de fonctionnement courantes respectives correspondant à des fréquences de rotation courantes respectives, lesquelles fréquences dépendent de la vitesse de production courante de la machine de traitement de conteneurs (2) ; où l'unité de calcul (6) est configurée pour déterminer les fréquences de dommages courantes respectives des composants rotatifs (22, 26) en fonction de fréquences de dommages de référence respectives et de fréquences de rotation courantes respectives, et pour détecter des anomalies de mouvement d'un ou plusieurs des composants rotatifs, par analyse du spectre de fréquences de vibration aux fréquences de dommages courantes respectives et éventuellement également aux harmoniques de fréquences et/ou aux bandes latérales associées ; où les pièces mécaniques (19) comprennent des couplages mécaniques (27) et les fréquences critiques courantes des couplages mécaniques correspondent à des fréquences de couplage courantes, lesquelles dépendent de la vitesse de production courante de la machine de traitement de conteneurs (2) ; et où l'unité de calcul (6) est configurée pour détecter des anomalies de mouvement d'un ou plusieurs des couplages mécaniques (27), par analyse du spectre de fréquences de vibration dans la région des fréquences de couplage courantes respectives ; où l'unité de calcul (6) est configurée pour analyser des caractéristiques et/ou des caractéristiques pertinentes du spectre de fréquences de vibration et les relier aux fréquences critiques courantes, pour déterminer quelles pièces mécaniques (19) présentent un fonctionnement anormal ; où l'unité de calcul (6) est configurée pour évaluer des pics et/ou des concentrations d'énergie à des fréquences respectives dans le spectre de fréquences de vibration et, sur la base d'une comparaison entre les fréquences associées aux pics et/ou concentrations d'énergie et les fréquences critiques courantes, déterminer les une ou plusieurs pièces mécaniques (19) présentant des anomalies de mouvement.

2. Système selon la revendication 1, dans lequel l'unité de calcul (6) est configurée pour déterminer les fréquences critiques courantes des composants rotatifs (22, 26) en tant que produit des fréquences de dommage respectives de référence et des fréquences de rotation courantes respectives.

3. Système selon l'une quelconque des revendications précédentes, dans lequel l'unité de calcul (6) est configurée pour : effectuer une analyse de fréquence dans une bande constante, selon laquelle le spectre de fréquences de vibration est divisé en un nombre de bandes de fréquence ayant une même largeur, chaque bande de fréquences correspondant à des fréquences critiques d'une ou plusieurs parties mécaniques (19) de la machine de traitement de conteneurs (2) ; calculer au moins une caractéristique du spectre de fréquences de vibration dans chaque bande de fréquences ; déterminer si l'au moins une caractéristique dans une ou plusieurs des bandes de fréquences dépasse une valeur seuil ou limite respective ; déterminer que les pièces mécaniques associées aux une ou plusieurs bandes de fréquences présentent un fonctionnement anormal.

4. Système selon la revendication 3, dans lequel les valeurs de seuil se réfèrent à un modèle de vibration de la machine de traitement de conteneurs (2) dans des conditions de fonctionnement normales et sont ajustées dynamiquement par l'unité de calcul (6), en fonction de la vitesse de rotation de la machine de traitement de conteneurs (2).

**5.** Système selon l'une quelconque des revendications précédentes, dans lequel le spectre de fréquences est lié à au moins l'une des variables suivantes : la Vrms (valeur quadratique moyenne de la vitesse de vibration), l'Arms (valeur quadratique moyenne de l'accélération de vibration) et l'Apeak (pic d'accélération de vibration).

**6.** Système selon l'une quelconque des revendications précédentes, dans lequel l'unité de calcul (6) est configurée pour effectuer l'une ou les deux d'une analyse instantanée basée sur un spectre de fréquences de vibration courantes et d'une analyse statistique, basée sur une évolution du spectre de fréquences de vibration dans le temps.

**7.** Système selon l'une quelconque des revendications précédentes, dans lequel l'unité de calcul (6) est configurée pour fournir des avertissements et/ou des alarmes lors de l'identification des anomalies de mouvement et générer un guidage de maintenance préventive avec des interventions suggérées sur la machine de traitement de conteneurs (2).

**8.** Système selon l'une quelconque des revendications précédentes, configuré pour détecter automatiquement la vitesse de production, et pour déterminer automatiquement les fréquences critiques, sur la base au moins de la vitesse de production.

**9.** Installation de traitement de conteneurs (2) comprenant au moins une machine de traitement de conteneurs (2) et un système pour surveiller des anomalies de mouvement dans l'au moins une machine de traitement de conteneurs (2), selon l'une quelconque des revendications précédentes.

FIG.1

20Hz

Frequency [Hz]

20kHz

FIG.3

Start

Receive
vibration data 10

Calculate vibration
frequency spectrum 11

Determine current
operating frequencies 14

Determine critical
frequencies 15

Determine motion
anomalies 16

Generate
warnings/alarms 18

FIG.2

FIG.4

EP 4 249 863 B1

FIG.5

FIG.6

**REFERENCES CITED IN THE DESCRIPTION**

**Patent documents cited in the description**

- EP 2226621 A1

- DE 102007039699 C5